# EUROPEAN PATENT APPLICATION

(11) **EP 4 567 325 A1**
(43) Date of publication of application: **11.06.2025**
(21) Application number: 23214604.3
(22) Date of filing: 06.12.2023
(51) Int. Cl.: F21S 43/14, F21S 43/239, F21S 43/245, F21S 43/249, F21V 8/00, B60R 13/00, F21W 104/00, G02B 19/00

(54) **DECORATIVE LIGHTING ASSEMBLY FOR A VEHICLE**

(71) Applicant: Hella Autotechnik Nova, s.r.o., 78985 Mohelnice (CZ)
(72) Inventor: Kuchynka, Tomas, 779 00 Olomouc (CZ)
(74) Representative: Behr-Wenning, Gregor

(57) **Abstract**

Decorative lighting assembly for a vehicle comprising a lightguide (1) and two light sources (2). The lightguide (1) comprises two branches (3) connected to each other through a connecting portion (4), and a protruding light input portion (5) located at the connecting portion (4). The input portion (5) comprises two mutually nonparallel input surfaces (6) and two conical reflection surfaces (7). Both light sources (2) are oriented in the same direction and are placed between the input surfaces (6). Each light source (2) preferably mainly illuminates one of the input surfaces (7) and illuminates the other of the input surfaces (7) to a lesser extent.

## Description

### Technical field

The present invention relates to decorative vehicle lamps, especially exterior lamps, e.g., to create an illuminated vehicle-manufacturer emblem. More specifically, it relates to an assembly comprising a branched lightguide with input portion located between the branches and with light sources directed towards the input portion.

### Background of the Invention

Decorative lamps and illumination assemblies are known components of vehicles. These lamps do not necessarily serve any mandatory illumination function such as turn signals, brake lights etc. They are mainly used to improve the vehicles' appearance, to make vehicles of a certain brand more distinguishable from other vehicles etc. The lamps can be incorporated into front grilles of vehicles, into headlights or taillights, they can be placed on hoods, lids, or doors and so on. An example of such an illuminated emblem is described in document US11427137B2.

Branched lightguides for vehicle lamps, for decorative as well as practical purposes, are also known in the art. When the angle between the branches is small, e.g., under 120°, it becomes difficult for light to be effectively transferred between the branches. It is then needed to provide each branch with its own light source. The light sources can be at the free ends of the branches or at the ends where the branches are connected, i.e., between the branches. Placing the light sources and the necessary lightguide input surfaces between the branches is usually more compact, but it can make construction of the lightguide more complicated. An example of such a branched lightguide is described in document US2011110111A1, where the input surfaces form a trapezoidal recess into the lightguide and two inclined light sources are placed in the recess.

There is however room for improvement regarding efficiency of transfer of light from the light sources into the lightguide, and regarding construction and manufacture of the lamps and their lightguides.

### Summary of the Invention

The shortcomings of the solutions known in the prior art are to some extent eliminated by a decorative lighting assembly for a vehicle, the assembly comprising a lightguide and two light sources. The lightguide comprises two branches and a connecting portion, wherein the branches are fixedly connected to each other via the connecting portion. The lightguide further comprises a protruding light input portion located at the connecting portion and comprising two mutually nonparallel input surfaces and two reflection surfaces. The reflection surfaces together form a part of a conical surface for reflecting light from the light sources towards the branches, and both light sources are oriented in the same direction and are at least partially located between the input surfaces.

The lightguide can have branches of substantially any length, shape and cross-section, e.g., the branches can have circular or rectangular cross-section. The branches can be substantially straight, or they can be curved or further branched. Their length can be e.g., from 3 cm to 150 cm, depending on the assembly's application. For example, as a decorative part of a headlight or taillight, the lightguide can have branches with lengths of 3-20 cm, while as a decorative part of an illuminated front grille or as a dashboard illumination, the branches can have more than 50 cm.

The lightguide can be made of any suitable material such as PMMA or polycarbonate or even glass. The light sources can each be a single source of light, especially an LED, but one or both the light sources can also be multiple sources of light, such as an array of LEDs. Orientation of the light sources in the same direction means that their optical axes, i.e., axes of the outputted light beam cones, are parallel. In other words, the light sources are not rotated with respect to each other. Thanks to the same orientation of the light sources, they can be carried by a common flat carrier element, especially by a flat printed circuit board (PCB). The PCB can carry further electronical components, such as light sources for other, e.g., non-decorative, lighting assemblies.

The connecting portion can have the same cross-section as the branches so that there might be no apparent border between the branches and the connecting portion. For example, the connecting portion can be a part of the lightguide's length without any outcoupling elements between the branches which both have outcoupling elements, such as grooves, indents, cuts, teeth etc. Preferably both the branches and the connecting portion are made from a single piece of material so that there is no need for connecting them in a separate manufacturing step.

The light input portion, i.e., the part of the lightguide which receives light from the light sources, is preferably also from the same piece of material. Due to its protruding, it does not significantly impact the lightguide's mechanical strength, e.g., the lightguide is less likely to break at the location of the input portion compared to the state of the art where the input portion is an area of decreased thickness where breaking can often occur at some point during long-term use. Delimiting a space for the light sources by the input portion, especially by its input surfaces, makes it possible to utilize almost all of light provided by the light sources. The input surfaces can be connected by a common edge, which is preferable, but there can also be an additional surface between them.

The input surfaces can be planar, and then they can define a groove where the light sources are located, e.g., a V-shaped or rectangular groove. The input surfaces can also be curved, e.g., can form a U-shaped groove. The input surfaces can surround the light sources from the sides (when they form a groove) or from more sides, e.g., the space for light sources can have the form of a cavity, e.g., having parabolical or hemispherical shape. Both input surfaces can thus be a part of a larger continuous surface, but they can also be fully separated. Making the input surfaces curved can provide improved light processing, e.g., improved homogeneity or effectivity. Planar surfaces, on the other hand, are easier to design and manufacture. Each input surface can be continuous, but can also be assembled from multiple sub-surfaces, e.g., can be formed from several planar sub-surfaces which are inclined relative to each other.

The reflection surfaces serve for directing light from the input surfaces towards the branches. Some of the light will be directed to the branches directly, but at some input angles, the light needs to be reflected in order to be properly utilized by the branches. Preferably, each input surface has its corresponding reflection surface such that the input surface is partially located between the light sources, or at least one of the light sources, and the respective reflection surface. The reflection surfaces are curved since they form a part of a conical surface. They can be separated from each other but can also be connected. For example, at some part of the input portion adjacent to the connecting portion, the reflection surfaces can form a whole closed perimeter of the conical shape. The conical shape can e.g., have a circular or elliptical perimeter/base. Preferably it is a right circular cone.

The combination of the protruding shape of the input portion with the conical reflection surfaces and with the light sources being partially enclosed by the input surfaces thus provides an improved effectiveness for transferring light into the lightguide, and therefore it improves the overall effectivity of the assembly. Placing the light sources between the input surfaces also saves space and the assembly can then be smaller, which is also a significant factor for vehicle lights.

First of the two light sources is preferably closer to first of the two input surfaces, wherein a major part of light from the first light source enters the lightguide through the first input surface and a minor part of light from the first light source enters the lightguide through the second input surface. At the same time, the second of the two light sources is preferably closer to second of the two input surfaces, wherein a major part of light from the second light source enters the lightguide through the second input surface and a minor part of light from the second light source enters the lightguide through the first input surface.

In other words, it is preferred if each input surface has one of the light sources assigned to it and placed closer to it, such that each light source mainly illuminates the respective one of the input surfaces. At the same time, each light source also illuminates the other input surface, with a smaller portion of its light. The minor portion of the light for each input surface can then be used to improve luminosity and homogeneity, i.e., it can make the branches brighter and more uniformly lit.

The assembly can further comprise a printed circuit board wherein both the light sources are carried by the printed circuit board. As described above, this is possible thanks to the light sources being parallelly oriented. Especially for LED sources, a PCB is the most common and practical way of carrying and powering the light sources and having both sources on one PCB simplifies manufacture.

Preferably, the light sources have a beam angle α of at least 120°, more preferably at least 150°. Since they are placed between the input surfaces, the higher beam angle α can be almost fully inputted into the lightguide and utilized. With the higher beam angle α, the light is more spread out and thus easier to homogenously transfer into the branches and along the branches.

The input surfaces can be formed as a lens, each with an optical axis directed towards one of the branches. The lens can be e.g., spherical, parabolic, freeform, or micro-optical. The direction of the optical axis corresponds to a direction where the largest amount of light is directed so it is advantageous to orient the input surface with the axis pointing towards a corresponding branch. The axis does not need to be parallel with the branch or pass through its whole length, it can for example only intersect the branch at its end where it's attached to the connecting portion. If the input surfaces are not lens, e.g., if they are planar, they can also have an axis, e.g., as a perpendicular line passing through the center of the surface. This optical axis is then also preferably directed towards one of the branches.

In some variants of the assembly, one of the input surfaces can be a lens, e.g., can be curved, while the other can be planar.

The input surfaces can be lenses with optical axes, wherein when viewed from a direction parallel to both the optical axes of the input surfaces, the optical axes form an angle β of between 90° and 130°. As described above, the input surfaces can have optical axes even if they are not lens, and then the axes preferably still have this angle β between them.

The cone which is partially formed by the reflection surfaces preferably has an apex angle γ from 30° to 140°, preferably from 40° to 120°. This angle influences if and how light is reflected on the reflection surfaces.

The branches can be inclined with respect to each other with an angle δ from 80° to 160°. All the above-mentioned angles α, β, γ, and δ can be chosen together since for example the angle of inclination between the input surfaces has an impact on a suitable choice of the apex angle defining the inclination of the reflection surfaces. At the same time, the angle of inclination between the input surfaces can be chosen at least partially based on the angle between the branches. Both angles β and γ can also have impact on a suitable beam angle α since an appropriate choice of these angles can ensure that too much light is not wasted by being reflected on an input surface or by not being reflected on a reflection surface.

Each branch preferably comprises a light output surface and an opposite outcoupling surface. The light output surfaces can then be on the inner side of the branches. Outcoupling surfaces reflect light towards the opposite output surface at such angles that the light passes through the output surface out of the lightguide. Each branch can be rotated about its longitudinal axis such that its vector of output direction does not lie between the branches. The vectors of the output directions of the branches can both have a component extending perpendicularly to a plane defined by axes of the branches.

The light input portion is then preferably located between the outcoupling surfaces, i.e., is on the opposite side of the lightguide than the output surfaces. The outer side of the lightguide is easier to access, e.g., with wiring for the light sources. The illuminated inner side of the branches can than be effectively used to form illuminated design patterns.

The light input portion can be divided into two sections protruding from the connecting portion, each section carrying one input surface and one reflection surface. The input surfaces than face each other and the light sources are between the sections.

### Description of drawings

A summary of the invention is further described by means of exemplary embodiments thereof, which are described with reference to the accompanying drawings, in which:
- Fig 1.: Shows a schematical sideview of an exemplary lighting assembly according to the invention which includes a branched lightguide and two LEDs, wherein the two LEDs are on a common PCB and are directed into a V-shaped groove formed by input surfaces of a protruding input portion of the lightguide, wherein the inputted light is carried by the branches and reflected towards inner sides of the branches which serve as light output surfaces.
- Fig 2.: Shows a detailed schematical sideview of the input portion of the light-guide shown in fig. 1.
- Fig 3.: Shows a simplified drawing of the input portion from fig. 2, wherein angles, axes and other imaginary features defining the input portion's construction are depicted in this figure.
- Fig 4.: Shows a detailed schematic perspective view of the input portion from fig. 2.
- Fig 5.: Shows a simplified schematic diagram of how light rays from the LEDs pass through the input surfaces into the lightguide, wherein some rays are reflected on reflection surfaces of the input portion.

### Exemplary Embodiments of the Invention

The invention will be further described by means of exemplary embodiments with reference to the respective drawings.

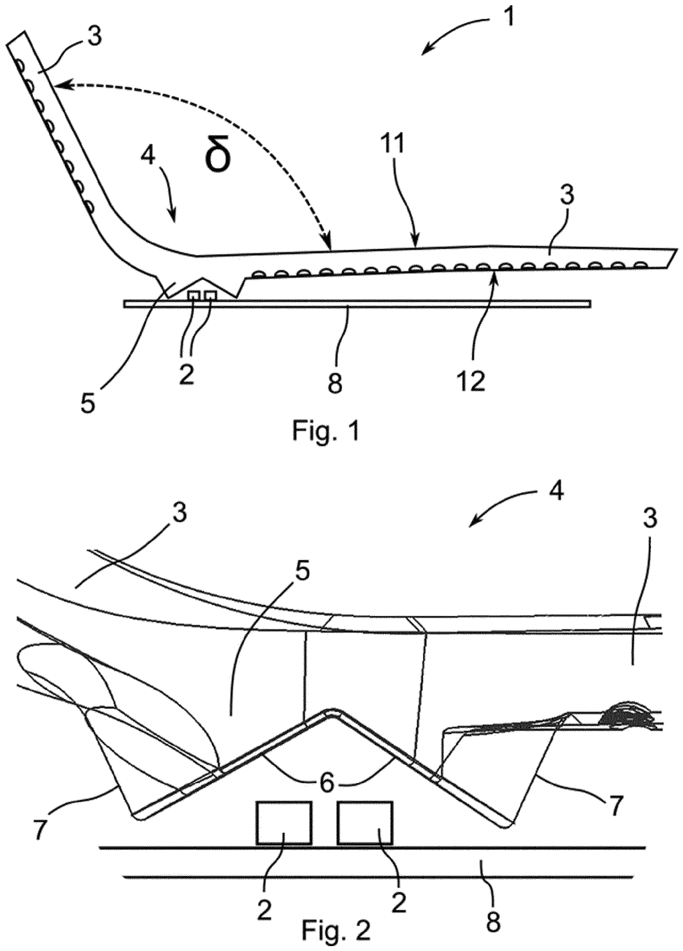

A first exemplary embodiment of the invention is shown in figs. 1 to 4. This embodiment is a decorative lighting assembly for an automobile. Several of these assemblies can be combined to create an illuminated emblem or illuminated letters as a part of an illuminated front grille or of a headlight.

The assembly comprises a PCB 8 with two parallelly oriented LED light sources 2 and a plate-shaped lightguide 1 with two branches 3 held together at a fixed angle by a connecting portion 4, which also carries an input portion 5 for letting light into the lightguide 1_. The assembly also comprises a frame holding the other components together, a cover lens, electrical connectors and wiring etc. (not shown).

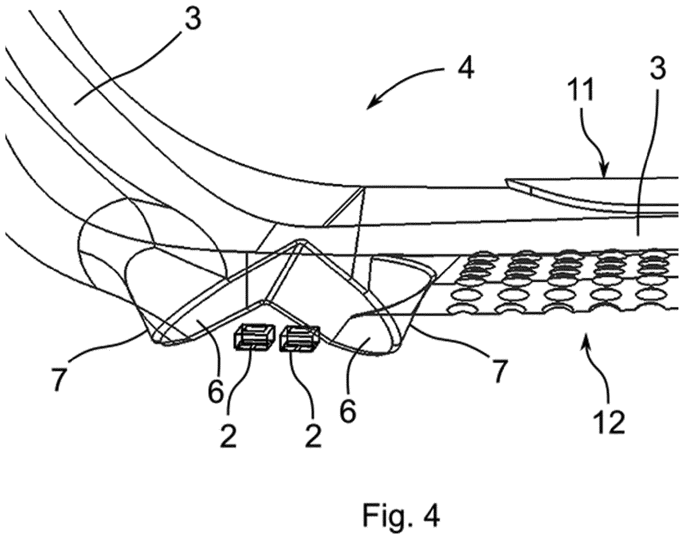

The lightguide 1 is made from polycarbonate and is made by injection moulding. Its width is about three times its thickness and both the width and the thickness are substantially constant along the whole length of the lightguide 1_, i.e., the whole length of both branches 3 and the connecting portion 4 between them. In the depicted embodiment, the branches 3 have different lengths. Both branches 3 have substantially planar surfaces, and the connecting portion 4 forms a rounded transition part between the branches 3. Each branch 3 comprises an output surface 11, which serves for letting the light out of the lightguide 1, and an outcoupling surface 12, which is located opposite to the output surface 11 and carries outcoupling elements which reflect light across the thickness of the branch 3 towards the respective output surface 11. In this embodiment, the outcoupling elements are formed as round indentations on the outcoupling surfaces 12 (see fig. 1 and 4).

The direction of the branches 3 is such that angle δ between them is about 115°. This angle is chosen so that three assemblies can be arranged into a circle with adjacent branches 3 of neighbouring lightguides 1 being substantially parallel. The output surfaces 11 of the branches 3 are on the inner sides of the branches 3, i.e., the angle between the branches 3 (which is smaller than 180°) is measured between the output surfaces 11. The lightguide 1 can thus serve as an illumination for the inside of a corner, e.g., forming a part of an illuminated perimeter of an emblem or of a letter, e.g., spelling out an illuminated car make designation. This angle can best be seen in fig. 1.

The connecting portion 4 has the same thickness as the branches 3 and the input portion 5 extends from the connecting portion 4 between the outcoupling surfaces 12, i.e., on the backside of the lightguide 1_. The input portion 5 is formed by two wedgeshaped sections. Each of the sections comprises one input surface 6 and one reflection surface 7, and these two surfaces have a common edge. The sections are arranged such that the input surfaces 6 of both sections also share an edge and define a V-shaped input groove which delimits a space for light sources 2 (see figs. 2-4). When viewed from the side, the input portion 5 thus has a W-shaped cross-section. When viewed along the length of any of the branches 3, the sections of the input portion 5 are hidden one behind the other (see fig. 4).

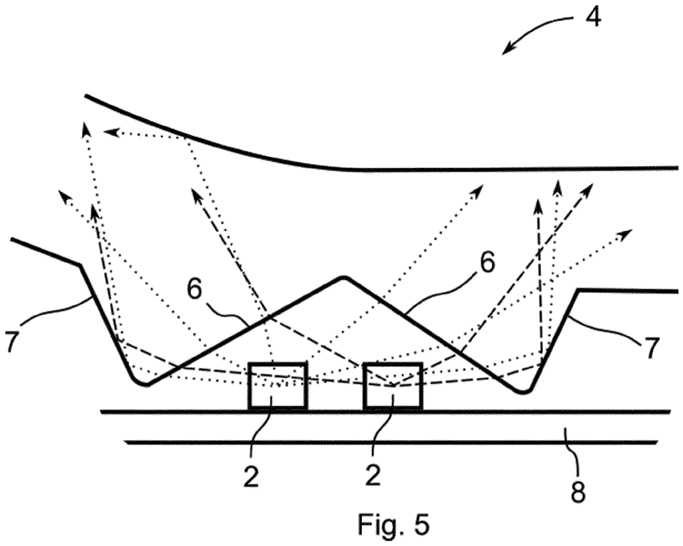

In the embodiment shown in the figures, the input surfaces 6 are planar. Both input surfaces 6 have an optical axis 9 which is perpendicular to the respective surface and intersects it at its centre. The reflection surfaces 7 together form a part of a conical surface, more precisely a part of a truncated circular cone 10 surface, where this surface is divided into two parts by the above-mentioned V-shaped groove. The rounded shape of the reflection surfaces 7 serves for reflecting light incoming through the respective input surface 6 into the respective branch 3 (see fig. 5).

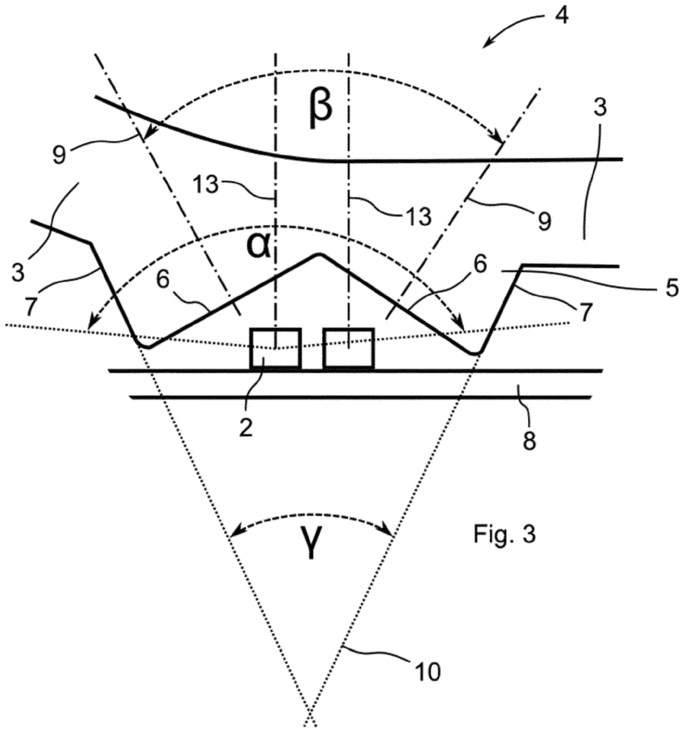

The functional surface of the input portion 5, i.e., both the input surfaces 6 together with both the reflective surfaces, has its shape influenced by two main angles. **The first of the angles is angle β between the optical axes** 9 of the input surfaces 6, which defines mutual inclination of the inner surfaces and thus influences how light enters the lightguide 1 and where it's directed after entry. The choice of this angle is influenced by arrangement of the light sources 2 and by orientation of the branches 3. It can be seen in fig. 3 that angle **β in depicted embodiment is around 65°. Both the optical** axes 9 of the input surfaces 6 intersect the connected ends of the branches 3 such that any light entering the lightguide 1 at an angle close to 90° passes directly into one of the branches 3.

**The second of the two angles is angle γ which is the apex** angle of the conical shape defined by the reflection surfaces 7, i.e., it is the angle between two opposite lines lying on the conical surface and intersecting at the apex (see fig. 3). This angle defines inclination of the reflection surfaces 7 and thus influences how light is reflected **on these two surfaces. In the shown embodiment, angle γ is about 50°. Angles β and γ** together define the shape of the W-shaped cross-section of the protruding input portion 5. The height of the protruding portion in this embodiment is about 4 mm, and the thickness of the branches 3 is about 4 mm as well.

The LED light sources 2 are both attached to the PCB 8 and thus are arranged in the same plane and with the same orientation, i.e., light source 2 axes 13 are parallel. In this embodiment, the arrangement of the two LEDs is symmetrical with respect to axis of the cone 10 formed by the reflection surfaces 7 when viewed from the side. The input portion 5 itself is however not symmetrical - the input surfaces 6 are slightly differently inclined and sized because they direct light into differently inclined branches 3 with different lengths. The PCB 8 can be provided with a heat sink (not shown).

As can be seen in fig. 5, the LEDs are arranged such that each of them provides more light for one of the input surfaces 6 and less light for the other input surface 6, i.e., each input surface 6 has a corresponding light source 2 which provides it with most of its light. The first light source 2 thus provides most of its light to the first branch 3 via the first input surface 6 (e.g., the left branch 3, the left LED and the left input surface 6), but some of its light is sent to the second branch 3. This minor part of the light complements the major portion of light from the second light source 2 in the second branch 3, and vice versa with light from the second light source 2. Each branch 3 thus receives a major part of the light from one LED and a minor part of the light from the other LED. This minor part comes from a slightly different direction than the major part, since the LEDs have different positions, and can thus be used to increase homogeneity of the light in the respective branch 3. The minor part can to some extent smooth inconsistencies of light (i.e., inhomogeneities) in the respective branch 3, e.g., it provides more light for parts of the branch 3 which would be darker if illuminated only by the other LED's major part.

The shape of the input surfaces 6 and the reflective surfaces can be designed based on this provision of light from the two different light sources 2 such that the homogeneity of the light provided by both branches 3 is increased by the shapes of the corresponding surfaces. Computer modelling software can be used to obtain shapes and sizes of the surfaces for providing such an improved homogeneity. In the first em**bodiment, the design mainly includes angles β and γ and sizes of the surfaces / of the** protruding input portion 5. In can be seen in fig. 1 that the input portion 5 in this embodiment is placed closer to the right branch 3 than to the left branch 3. The input portion 5 protrudes in direction perpendicular to direction of the right branch 3. This position of the input portion 5 is chosen mainly to enable the PCB 8 to be parallel with the right branch 3 to make the assembly as compact as possible, but it also influences the optical function of the input portion 5. The position and inclination of the input portion 5 on the lightguide 1 is thus also considered when designing the shape of its surfaces.

Another design parameter which defines the assembly, and which is considered together with the above-mentioned aspects, is a beam angle **α of the light sources** 2. In the first embodiment, both LEDs have the same beam angle **α of 170° and 90** % of light is outputted from the LEDs inside of a cone with this apex angle (see fig. 3, where angle **α is shown for only one of** the LEDs for sake of clarity, and fig. 5). These wide beams, together with the LEDs being placed partially inside of the V-shaped groove of the input portion 5, i.e., between the input surfaces 6, enable the input portion 5 to effectively process a high amount of light from the LEDs and to increase the overall homogeneity.

In a second exemplary embodiment, the assembly according to the first embodiment is a part of a vehicle headlight. The headlight comprises multiple decorative lighting assemblies arranged into a decorative pattern. The headlight then further comprises any usual headlight components, such as headlight modules for providing main illumination functions (high beam, low beam, turn signals, daytime running lights etc.), casing, lenses, actuators, connectors etc.

In a third exemplary embodiment, the assembly is the same as in the first embodiment, except that the input surfaces 6 are not planar. In some variants of this embodiment, the surfaces are spherical lenses, curved either inwards or outwards. In other variants they are freeform lenses or lenses with micro-optical elements.

In yet another embodiment, the light sources 2 are comprised from multiple LEDs. In other embodiments, the shape, size and inclination of the branches 3 can be different than depicted, as well as the shape and size of the outcoupling elements and of the input portion 5. Other embodiments within the scope of the claims will be apparent to one skilled in the art.

### Reference list

1. Lightguide
2. Light source
3. Branch
4. Connecting portion
5. Input portion
6. Input surface
7. Reflection surface
8. Printed circuit board
9. Optical axis
10. Cone
11. Output surface
12. Outcoupling surface
13. Light source axis

## Claims

1. Decorative lighting assembly for a vehicle comprising a lightguide (1) and two light sources (2) wherein the lightguide (1) comprises two branches (3) and a connecting portion (4), wherein the branches (3) are fixedly connected to each other via the connecting portion (4), **characterized in that** the lightguide (1) further comprises a protruding light input portion (5) located at the connecting portion (4) and comprising two mutually nonparallel input surfaces (6) and two reflection surfaces (7), wherein the reflection surfaces (7) together form a part of a conical surface for reflecting light from the light sources (2) towards the branches (3), and wherein both light sources (2) are oriented in the same direction and are at least partially located between the input surfaces (6).

2. The decorative lighting assembly according to claim 1 **wherein** first of the two light sources (2) is closer to first of the two input surfaces (6), wherein a major part of light from the first light source (2) enters the lightguide (1) through the first input surface (6) and a minor part of light from the first light source (2) enters the lightguide (1) through the second input surface (6), wherein second of the two light sources (2) is closer to second of the two input surfaces (6), wherein a major part of light from the second light source (2) enters the lightguide (1) through the second input surface (6) and a minor part of light from the second light source (2) enters the lightguide (1) through the first input surface (6).

3. The decorative lighting assembly according to any of the preceding claims **wherein** the assembly further comprises a printed circuit board (8) wherein both the light sources (2) are carried by the printed circuit board (8).

4. The decorative lighting assembly according to any of the preceding claims **wherein** the light sources (2) have a beam angle α of at least 120°.

5. The decorative lighting assembly according to any of the preceding claims **wherein** each of the input surfaces (6) is a lens with an optical axis (9) directed towards one of the branches (3).

6. The decorative lighting assembly according to any of the preceding claims **wherein** each of the input surfaces (6) is a lens with an optical axis (9), wherein when viewed from a direction parallel to both the optical axes (9) of the input surfaces (6), the optical axes (9) form an angle β of between 90° and 130°.

7. The decorative lighting assembly according to any of the preceding claims **wherein** the cone (10) which is partially formed by the reflection surfaces (7) has an apex angle γ from 30° to 140°.

8. The decorative lighting assembly according to any of the preceding claims **wherein** the branches (3) are inclined with respect to each other with an angle δ from 80° to 160°.

9. The decorative lighting assembly according to any of the preceding claims **wherein** each branch (3) comprises a light output surface (11) and an opposite outcoupling surface (12), wherein the light output surfaces (11) are on the inner side of the branches (3).

10. The decorative lighting assembly according to claim 9 **wherein** the light input portion (5) is located between the outcoupling surfaces (12).

11. The decorative lighting assembly according to any of the preceding claims **wherein** the light input portion (5) is divided into two sections protruding from the connecting portion (4), each section carrying one input surface (6) and one reflection surface (7).
